# EUROPEAN PATENT APPLICATION

(11) **EP 2 865 708 A1**
(43) Date of publication of application: **29.04.2015**
(21) Application number: 14186407.4
(22) Date of filing: 25.09.2014
(51) Int. Cl.: C08J 11/08

(54) **Polystyrene recovery method**

(30) Priority: 27.09.2013 GB 201317191
(71) Applicant: Osborn, Francis, Weymouth, Dorset DT4 0UD (GB); Oliphant, Paul, Tarporley, Cheshire CW6 9DW (GB)
(72) Inventor: Osborn, Francis, Weymouth, Dorset DT4 0UD (GB)
(74) Representative: Andrews, Paul David

(57) **Abstract**

This invention relates to a method for preparing a solution of polystyrene comprising the step of (a) dissolving the polystyrene in a solvent comprising at least 50% by weight of dimethyl 2-methylpentanedioate. This invention also relates to slurries and solutions of polystyrene, and to polystyrene obtainable by the method.

## Description

Polystyrene is an oil-based product, made from styrene and blown using pentane or air, and comes in various forms and shapes - beads, spheres. These are then processed with steam to expand from a solid to a soft bead. These beads are then expanded to form various densities, which can then be made into moulds or different shapes as required. Moulds are usually made by again using steam and compressed.

Sources of information such as PLASMART, Hong Kong Wanfangdata indicate about 13 - 15 million tonnes of polystyrene is manufactured globally per annum. This figure is set to increase by 40-45% by 2020. TOTAL Petrochemicals will have 25 sites across the world producing 2,500Kt of polystyrene. (see http://www.totalrefiningchemicals.com/SiteCollectionDocuments/Press_releases_n ews/CP-TPCH-SHAW-19032012-en.pdf).

According to the British Plastics Federation, expanded polystyrene (EPS) is made by the following multi-stage process:

### Stage 1 - Pre-Expansion

Polystyrene is made from polymerisation of styrene and formed into high density beads. These beads are expanded to 40 times their size using approximately 5% of a blowing agent - pentane. This process involves the heating of beads, using a flow of steam, which causes the blowing agent to boil and thus a honeycomb of closed cells is formed.

### Stage 2 - Maturing

As the material cools the pentane liquefies and a partial vacuum is formed inside the bead. The beads are returned to a holding tank for approximately twelve hours to allow the pressure differential to equalize, giving a stabilised granule.

### Stage 3 - Final Forming / Moulding

In this final stage the pre-expanded stabilized beads are reheated with steam in a mould. The final expansion takes place and the beads coalesce to give a shaped moulding. This can also be used to form large blocks which can be sectioned to the required shape as panels, boards, cylinders etc. In this final form the EPS is made up of 98% air.

EPS can be used in many industries, including food, packaging and construction. Below is some information on EPS:
- EPS is nominally 98% air, depending on the density
- EPS is extremely lightweight; this helps to reduce fuel consumption, when goods are transported in EPS compared to other heavier packaging materials.
- The protective performance of EPS helps to reduce wastage caused by goods that are broken or damaged in the supply chain. This saves resources of energy, materials and transportation.
- EPS is HFC, CFC and HCFC free. Pentane is used as its blowing agent. No pentane exists in the final form
- EPS is not biodegradable - so will remain in the same form in landfill sites for a long time

EPS is collected in compacted form to minimise any environmental impact. Despite the suitability of polystyrene for a wide variety of applications, organisations are faced with the growing problem of finding alternative methods of disposal of waste packaging, especially with increasing environmental legislation. In addition, there is a general drive to recycle materials where possible, particularly materials such as EPS which are not biodegradable.

It is known that EPS dissolves in, for example, acetone. However, the resulting solution is environmentally undesirable and is very difficult to subsequently process for polystyrene recovery.

In Europe, current plastic waste management technologies are highly dominated by incineration followed by mechanical and feedstock/chemical recycling. The aim of these technologies is to maximize the plastic waste management efficiency considering existing regulatory limitations. Several major disadvantages hinder efficiency maximisation of these technologies, which are as follows:

Low product quality: At high temperature most of the thermoplastics start to dissociate, such as PS at 302°C, and thus recycled plastics through mechanical process might have the influence of quality degradation. In addition, impurities such as dirt, additives etc. cannot be removed through conventional mechanical recycling process and thus products obtained from this process have low acceptability in the market when compared to virgin materials.

High level of emission: Incineration of plastic waste generates 2.06-2.84 MtCO₂eq/tonne, which is higher than virgin plastic production, 1.77-2.23 MtCO₂eq/tonne. In addition, incineration generates dioxin, nitrogen oxides, volatile organic carbons (VOC), carbon monoxide, and other trace pollutants.

Large volume of solvent loss: A wide variety of solvent/non-solvent mixtures, such as butyl acetate/n-heptane, p-xylene/n-heptane, MEK/n-hexane, MEK/n-heptane, MEK/methanol7, N-Methyl-2-pyrrolidone (NMP)/n-octane+n-hexane, Cyclohexanone/n-hexane are employed in recycling of thermoplastics. However, these technologies were unable to implement commercially, since all solvents cannot be recovered due to their physic-chemical affinity with polymers, and high operating costs of solvent recovery system, which is close to virgin plastic production.

### Current State-of-the-art recycling processes of plastic wastes

Terminology for plastics recycling is complex and diverse because of the wide range of recycling and recovery activities. These include four categories: (i) primary (mechanical reprocessing into a product with equivalent properties), (ii) secondary (mechanical reprocessing into products requiring lower properties), (iii) tertiary (recovery of chemical constituents), and (iv) quaternary (recovery of energy). Primary recycling is often referred to as closed-loop recycling, and secondary recycling as downgrading. Tertiary recycling is either described as chemical or feedstock recycling and applies when the polymer is de-polymerized to its chemical constituents. Quaternary recycling is energy recovery, energy from waste or valorisation. Biodegradable plastics can also be composted, and this is a further example of tertiary recycling, and is also described as organic or biological recycling.

Bring schemes and kerbside collections are the common practices in European countries. Bring-schemes tend to result in low collection rates in the absence of either highly committed public behaviour or deposit refund schemes that impose a direct economic incentive to participate. To maximize the cost efficiency of these programmes, most kerbside collections are of comingled recyclables (paper/board, glass, aluminium, steel and plastic containers). While kerbside collection schemes have been very successful at recovering plastic bottle packaging from homes, in terms of the overall consumption typically only 30-40% of post-consumer plastic bottles are recovered, as a lot of this sort of packaging comes from food and beverage consumed away from home.

### Mechanical recycling

Mechanical recycling of plastics refers to processes which involve the reprocessing of plastic waste by melting, shredding or granulation. This process is performed through heating to melt and to reduce the volume of plastic as required. The maximum temperatures in the recovery section vary depending on polymer type from 130-260°C. A key criterion for successful mechanical recycling is the availability of homogeneous waste streams of known characteristics. Mechanical recycling processes lead to the relatively lowest energy demand and highest CO₂ savings, they generate negligible hazardous emissions and low levels of -mostly inert-residues. Main technical problems encountered during mechanical recycling are:
(i) degradation of the material due to repeated processing, resulting in a loss in of properties such as appearance, chemical resistance, processibility, and mechanical characteristics;
(ii) contamination of the reprocessed plastic;
(iii) handling of low bulk density scrap such as film or foam.

Re-extrusion, re-grinding, and re-melting are widely used mechanical recycling processes in the EU, which are briefly explained in the following section with their most common disadvantages in recycling activities:

Re-extrusion - Re-extrusion is the re-introduction of scrap, industrial or single-polymer plastic edges and parts to the extrusion cycle in order to produce products of the similar material. This process utilizes scrap plastics that have similar features to the original products. Primary recycling is only feasible with semi-clean scrap, therefore making it an unpopular choice with recyclers. A valid example of primary recycling is the injection moulding. Moulded products that do not meet the specifications are palletised and reintroduced into the recycling loop or the final stages of the manufacturing.

Re-Grinding - The most common mechanical recycling method is to re-grind of waste plastic. This re-grind is then reintroduced into the machine hopper during moulding production. Since the process is unable to remove impurities, re-ground plastic is used low grade plastic products. Cold grinding, also known as cryogenic grinding, the pre-crushed plastic chips are made brittle by liquid nitrogen (LN₂), so that they can be ground more easily in the hammer mills. In case of cryogenic grinding, one phase normally suffices for reaching the requested separation of the components and obtaining a broad particle size spectrum of rubber crumb. Major disadvantage of this technology is the high cost for the use of liquid nitrogen, since one to two tonnes of LN₂ are required for one tonne of waste plastic.

Warm grinding takes place at ambient room temperature. Plastic chips are crushed in fast running granulators or mills without being made brittle. By means of (cutting) granulators connected in series the product is reduced gradually to the requested granular size. The main disadvantages of warm grinding with granulators are the high energy demand due to the use of several crushing phases as well as the relatively high wear of the granulator knives causing high maintenance and wear parts costs.

Re-melting - Re-melting is one of the most popular mechanical recycling processes where plastic waste is re-melted at high temperature, above their melting temperature. In this process plastic is ground, melted and sent through a contamination filter where it then has the ability to be mixed with additives and virgin material for use in solid products. Re-melting process is limited both by the low purity of the polymeric wastes and the limited market for the recycled products. Recycled polymers only have commercial applications when the plastic wastes have been subjected to a previous separation by resin; recycled mixed plastics can only be used in undemanding applications. Melting process is not favoured for complex mixtures of plastics or very contaminated plastics.

The possibility of obtaining secondary materials with good mechanical properties in a single re-melting operation without separation steps is very appealing, but many obstacles must be overcome. In particular, the thermodynamic incompatibility of chemically different polymers leads to poor mechanical performance of the resultant mixtures, usually inferior to that of the original components.

### Chemical/feedstock Recycling

Feedstock recycling, also known as chemical recycling refers to techniques used to break down plastic polymers into their constituent monomers, which in turn can be used again in refineries, or petrochemical and chemical production. Feedstock recycling encompasses a number of technologies, which can be attractive recovery solutions for plastic waste not best suited to mechanical recycling, e.g. mixed packaging waste. Such technologies turn plastics into basic chemicals for use, among other things, as building blocks for new plastics. Feedstock (chemical) recycling technologies satisfy the general principle of material recovery, but are more costly compared to mechanical recycling, and less energetically favourable as the polymer has to be depolymerized and then re-polymerized.

Most widely used chemical recycling processes include de-polymerisation, thermal cracking, hydrogenation, and gasification. In principle, cleavage of the polymer chains results in chemical products of lower molecular weight distribution or even in the original intermediates (monomers) which can be used for another complete cycle of polymerization.

De-Polymerisation - The use of de-polymerization is on the cutting edge. By using ionic liquids or a terpene hydrocarbon such as d-limonene, an orange byproduct, plastic waste can be degraded. The resulting polymer solution can then be separated from the solvent and be mixed with other additives and materials. This has a large advantage over re-melting as its process produces 30% less CO₂ emissions and consumes 20% less energy while achieving the same goal. The disadvantage of chemical de-polymerisation is that it is almost completely restricted to the recycling of condensation of polymers and it is no use for the decomposition of most additional polymers which are main components of the plastic waste streams.

Thermal cracking - The thermal recycling of post-consumer plastic wastes has been studied most extensively for high-value petrochemical or fuel feedstock. The technique is based on a fluidized bed, in which the plastics are fed in the solid state and sand is used for helping fluidization. Pyrolysis is the thermal degradation of organic waste in the absence of oxygen to produce a carbonaceous char, oil and combustible gases.

Among the advantages of the stand-alone process are ease of operation and relatively low investment, recyclers, and landfill operation to own and operate them as part of their waste management practices. The *disadvantage* in these systems is in the removal of the many minor products formed from the pyrolysis reactions.

### Energy recovery

This process refers to the use of waste principally as a fuel or other means to generate energy. Mixed plastics waste has a high calorific value and can substitute fossil fuels in combustion plants generating heat and/or power. It can also be used as an alternative fuel in energy-intensive processes, e.g. cement manufacture. Energy recovery processes constitute the most common recovery route in Europe for complex and contaminated post-consumer plastic waste streams, due to their less demanding specifications for the inlet material. However, incineration has a main drawback: the production of toxic ash (30-40% of the initial amount) and toxic air emissions (dioxines, chlorocompounds etc.). Thus, incineration cannot solve the waste problems and there are adherent disadvantages to this technology such as (i) Oxides of sulphur and nitrogen, hydrogen chloride and various organic compounds either present in the waste or formed by incomplete combustion, (ii) intermediate products are formed due to incomplete combustion of plastic wastes, (iii) nitrogen oxides are formed both by oxidation of nitrogen in the waste and by fixation of atmosphere nitrogen in high temperature flames, and (iii) environmental burden due to the disposal of ashes and slag. For example, flue gas cleaning residues often have to be disposed of as hazardous waste due to the toxicity of the compounds they absorb.

This invention seeks to provide a method for dissolving polystyrene, preferably from EPS, so that it can optionally either be (i) recovered and re-used, or (ii) disposed of in a form that takes up a significantly lower volume in landfill.

In accordance with this invention there is provided a method for preparing a solution of polystyrene comprising the step of:
(a) dissolving the polystyrene in a solvent comprising at least 50% by weight of dimethyl 2-methylpentanedioate.

The polystyrene dissolved in step (a) is preferably expanded polystyrene. During the dissolution of the expanded polystyrene in the solvent, there is a substantial reduction in volume as the air in the expanded polystyrene is removed. Stirring may be used to aid dissolution. Dimethyl 2-methylpentanedioate is also known as (i) dimethylester-2-methyl-pentanedioic acid, and (ii) dimethyl - methyl glutarate.

The solvent-based treatment of polystyrene waste according to the present invention is of commercial interest for many reasons, including:
(i) The dissolution of the polystyrene can cause a significant increase in the bulk density of the waste material;
(ii) The polystyrene may eventually be converted into a form acceptable to fabrication equipment (powder or small grains);
(iii) Insoluble contaminants and additives can at least partially be removed by filtration, leaving pure material. These additives may also be reused;
(iv) Any defective material, such as gelling lumps, due to the previous degradation history, can at least partially be removed by filtration during the dissolution stage;
(v) Except heating to aid dissolving (also related to the solvent and the conditions chosen) minimal further degradation, due to the recycling process itself, is anticipated;
(vi) The value added during the polymerization stage is maintained intact and the recycled polystyrene, which can be substantially free of contaminants, can be used for any kind of application, since the final product can be of competitive quality compared with the virgin material.

The present invention has a number of further advantages compared to traditional forms of plastic treatment, as follows.

Scalability - This is a truly flexible solution which can be configured to provide anything from a small-scale unit, to a large-scale, purpose-built facility commissioned for an individual customer. This is something which none of the existing treatment options can offer. Hence, the solution can be offered in a range to suit particular volumes and budgets. In its mobile form, can fit into a footprint of 12m x 2.4m x 2.6m, The technology is not be constrained by location, in direct contrast to existing solutions, and will thus accommodate variances in localised transport issues, site layout conditions and access points on a temporary or extended basis. Indeed, the mobile unit could prove to be an excellent business development and market penetration tool, especially in the formative stages of its introduction to the industry.

Cost-benefit - In comparison to traditional methods (for example, those described under the heading "Chemical/feedstock Recycling" above), this invention offers a more affordable solution - especially during the current economic climate. Because none of the mechanical recycling solutions are particularly high tech, the initial outlay can be managed quite carefully. In addition, the scalability of the solution means that it can be adjusted to match the budget constraints of each customer. Similarly, running costs will be low since our estimation identifies that it will have 30% less electricity consumption compared to chemical recycling. In addition, solution will be far superior to, and much less expensive compared to traditional treatment options. Return on investment (ROI) is expected to be fast (3-4 years). The combination of low capital outlay and running costs means that ROI will be quickly achieved, leading to very attractive profit accumulation.

Flexible product - The recycled polysytrene produced by the invention can provide a highly efficient and high quality finished product since it can be designed to prevent heat loss utilising heat exchangers for both dissolution and vacuum distillation units. The system will have the flexibility to deliver products to satisfy a range of end market needs:
- Pure pellets of polystyrene, making them ideal for plastic converters
- Creating pellets at source means that clients such as plastic waste collectors will have the option to recycle collected waste plastics in their own facilities- sell the recycled products on to end users.

The solvent preferably comprises at least 70% by weight of dimethyl 2-methylpentanedioate, more preferably at least 80% by weight, even more preferably at least 85% by weight, most preferably about 88% by weight.

It is preferred that the solvent comprises between 5% and 15% by weight of dimethyl 2-ethylsuccinate (also known as dimethylester-ethyl-butanedioic acid), preferably between 9% and 13%, more preferably between 10% and 12%, most preferably about 11% by weight.

It is preferred that the solvent comprises less than 1% by weight of 2,3-dimethyl-methylester-butanedioic acid, preferably less than 0.5% by weight, more preferably less than 0.1% by weight. In some embodiments, the solvent comprises at least 0.01% by weight of 2,3-dimethyl-methylester-butanedioic acid.

It is preferred that the solvent comprises less than 1% by weight of 2,3-dimethyl-dimethylester-butanedioic acid, preferably less than 0.5% by weight, more preferably less than 0.1% by weight. In some embodiments, the solvent comprises at least 0.01% by weight of 2,3-dimethyl-dimethylester-butanedioic acid.

It is preferred that the solvent comprises between 0.5% and 2% by weight of dimethyl adipate (also known as dimethyl iso-adipate or dimethylester-hexanedioic acid), preferably between 0.8% and 1.5% by weight, more preferably between 1% and 1.2% by weight, most preferably about 1.1% by weight.

A particularly preferred solvent composition comprises about 88% by weight of dimethyl 2-methylpentanedioate, about 11% by weight of dimethyl 2-ethylsuccinate, less than 0.1% by weight of 2,3-dimethyl-methylester-butanedioic acid, less than 0.1% by weight of 2,3-dimethyl-dimethylester-butanedioic acid, and about 1.1% by weight of dimethyl adipate. An example of a suitable composition comprises 87.96% by weight of dimethyl 2-methylpentanedioate, 10.86% by weight of dimethyl 2-ethylsuccinate, 0.04% by weight of 2,3-dimethyl-methylester-butanedioic acid, 0.05% by weight of 2,3-dimethyl-dimethylester-butanedioic acid, and 1.09% by weight of dimethyl adipate.

The term "expanded polystyrene" is used in relation to this invention to refer to any polystyrene foam.

In accordance with this invention there is also provided a method for recovering polystyrene from expanded polystyrene comprising the step of:
(a) dissolving the expanded polystyrene in a solvent comprising at least 50% by weight of dimethyl 2-methylpentanedioate.

The above methods may additionally comprise, in step (a), the step of reducing the particle size of the expanded polystyrene before dissolving the polystyrene. The step of reducing the particle size may comprise cutting the expanded polystyrene, for example by passing it through a shredder, and/or granulating the expanded polystyrene. In a preferred embodiment, the step of reducing the particle size of the expanded polystyrene comprises cutting and/or crushing the expanded polystyrene followed by granulating the expanded polystyrene. Cutting/crushing and/or granulating the expanded polystyrene improves its solubility, thereby increasing the efficiency of the method of the invention.

Preferably, if the methods include granulation or cutting, the expanded polystyrene is cut and/or granulated such that it has a mean particle diameter of 50mm or less, more preferably 20mm or less, even more preferably 10mm or less, and most preferably about 8mm.

Granulation may be carried out using a machine (ie a granulator), preferably having two or more cutters attached to a rotor which is used to convert scrap thermoplastic material into a form suitable for further processing. Scrap may be fed into the granulator through a chute or hopper from where it falls into the cutting chamber. In the cutting chamber two or more rotating knives pass close to stationary knives. The polystyrene scrap may be sheared between the cutting edge of the rotating and stationary knives. For granulating high impact polystyrenes, knives can be ground to cut the polystyrene like an axe, which will shatter it rather than shear it. The geometry of the knives is dictated by the requirement of good design, that only one rotating knives be in the cutting position with any fixed or stationary knife at any one time. This distributes the cutting action evenly and eliminates unnecessary shock. As for example, in a granulator with three knives, only one at a time is in the cutting position with one of the two fixed knives. The chips or pellets are of random size and shape. Maximum pellet size is set by a screen at the exit to the cutting chamber.

It is preferred that, during step (a), the solvent is heated to a temperature above room temperature (ie above 25°C). Preferably, the heating is to a temperature of 150°C or less, more preferably 100°C or less, even more preferably 80°C or less, more preferably 50°C or less. In a particularly preferred embodiment, the hearing is to a temperature of about 45°C. One suitable method of heating is by microwave. Heating the solvent increases the solubility of the expanded polystyrene.

Preferably, after step (a), the method for recovering polystyrene includes the step of removing any undissolved solids. This can be done by filtration. In some embodiments, a mesh filter is used. A suitable mesh size is about 5mm. This is preferably the maximum mesh size.

In some embodiments, after step (a) and after the optional removal of undissolved solids, the method for recovering polystyrene comprises the step of removing at least some of the solvent from the solution. This is preferably done by heating the solution to a temperature above room temperature (ie above 25°C) and/or applying a vacuum to the solution. In a preferred embodiment, the method for recovering polystyrene comprising heating the solution to a temperature above room temperature (ie above 25°C) and applying a vacuum to the solution. Preferably, the heating is to a temperature of at least 50°C, more preferably at least 100°C, even more preferably at least 150°C, most preferably about 190°C. It is preferred that the solution is heated to a temperature of 200°C or less. This is in order to minimise the possibility of degradation of the polystyrene. The vacuum applied is preferably at least 70%, more preferably at least 80%, most preferably at least 85%. In this context, a vacuum of 0% is standard atmospheric pressure (ie 100kPa), and a vacuum of 100% is a pressure of 0kPa. Evaporated solvent may be passed through a condenser (eg a water-cooled condenser) so that it can be recovered. Solvent removal can be achieved by using vacuum distillation apparatus, such as a Normalab Analis P 1280 distillation unit. Distilling under vacuum allows the solvent to be distilled at a temperature lower than its boiling point, thereby avoiding the thermal degradation of the polymer. Vacuum distillation allows the possibility of near total recovery of the Estakleen® solvent.

The solvent recovered from the solvent removal step described above can be re-used. To prevent high level contamination in solvents, after every 8 cycles the solvent may optionally be purified by distillation. The product of the solvent removal step is normally a slurry of polystyrene in the solvent. The product of this method (eg the slurry) can then either be disposed on in landfill or utilised as a source of recycled polystyrene, as well as being suitable for other manufacturing purposes. In relation to this invention, the term "slurry" is used to mean a mixture of particles and a liquid, for example polystyrene particles in the solvent. In some embodiments, the slurry is dried. A suitable drying technique is microwave drying. Microwaves are a form of electromagnetic energy with frequencies between 300 MHz and 300 GHz, generated by magnetrons under the combined force of an electric and a magnetic field perpendicular to each other.

The resulting polystyrene may subsequently be cooled, and optionally pelletized. Pelletization may be carried out by extrusion. Extrusion is a process where a solid plastic (also called a resin) is preferably continuously fed to a heated chamber and carried along by a feed screw. The feed screw may be driven via drive/motor. Tight speed and torque control is critical to product quality. The plastic is preferably conveyed with compression and forced out of the chamber at a steady rate through a die. The immediate cooling of the melt results in resolidification of that plastic into a continually drawn piece whose cross section matches the die pattern. This die is preferably engineered and machined to ensure that the melt flows in a precise desired shape.

This invention also relates to a slurry of polystyrene in the solvent described above obtainable by the method described above. In addition, this invention relates to a solution of polystyrene in the solvent described above obtainable by the method described above.

In accordance with the invention there is also provided a solution of polystyrene in a solvent as defined above.

In addition, in accordance with the invention there is provided a slurry of polystyrene in a solvent as defined above.

This invention also relates to polystyrene obtainable by the method described above.

This invention also relates to the use of a solvent as defined above to dissolve polystyrene, preferably expanded polystyrene.

Embodiments of the invention will now be described, by way of example only, with reference to the accompanying drawing, in which:

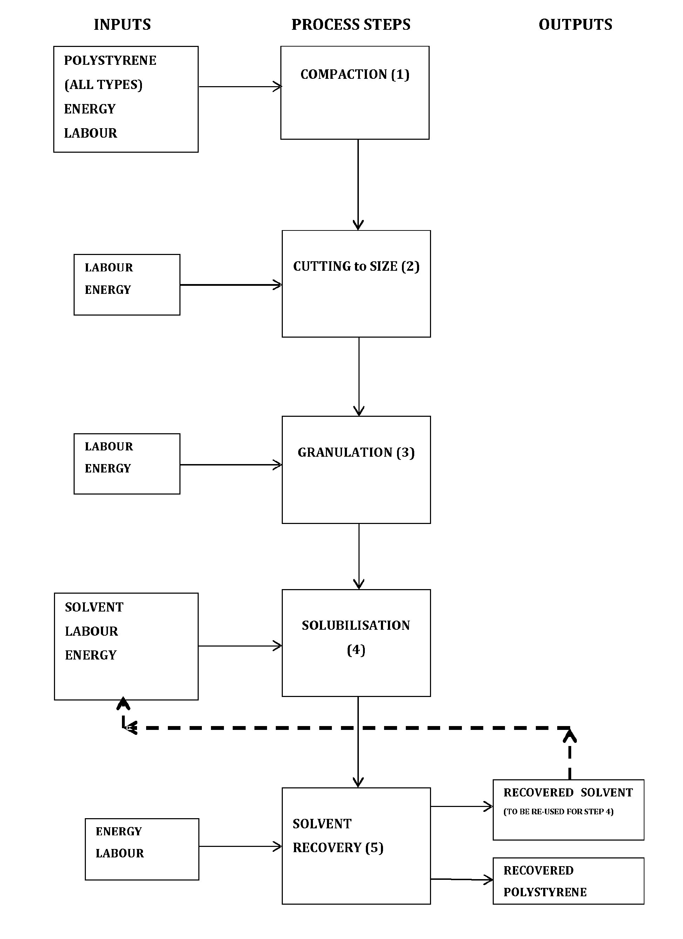

Fig. 1 is a process flow diagram for one embodiment of the method of the invention.

### Example 1

In this example, the optional compaction step (ie step (1) in Figure 1) was omitted.

The polystyrene was fed into a shredder to cut it into smaller pieces of approximately 8mm diameter (ie step (2) in Figure 1).

In this example, the optional granulation step (ie step (3) in Figure 1) was omitted.

50kg of shredded polystyrene was then dissolved in 300 litres of a solvent mixture comprising 87.96% by weight of dimethyl 2-methylpentanedioate, 10.86% by weight dimethyl 2-ethylsuccinate, 0.04% by weight of 2,3-dimethyl-methylester-butanedioic acid, 0.05% by weight of 2,3-dimethyl-dimethylester-butanedioic acid and 1.09% by weight of dimethyl adipate (ie step (4) in Figure 1). To increase the solubility of the polystyrene, the solvent was heated to a temperature of 45°C. Any undissolved solids were then removed by passing the solution through a 5mm mesh filter.

150 litres of the solution was then heated to 190°C under a vacuum of 85% in order to remove as much solvent as possible by distillation (ie step (5) in Figure 1). The recovered solvent is then available for re-use. The product of the distillation is a slurry of polystyrene in the solvent, which is then suitable for recovery and re-use of the polystyrene, or sending to landfill. It is intended that this process could be scaled up to a large continuous plant working 24 hours per day.

### Comparative Example 1

The above procedure was repeated using acetone as the solvent instead of the solvent mixture of Example 1. This resulted in a very viscous polystyrene solution which was difficult to process. In addition, the flammability of acetone makes it unattractive as a solvent.

### Comparative Example 2

The above procedure was repeated using methylene chloride as the solvent instead of the solvent mixture of Example 1. However, the toxicity of methylene chloride means that its use is problematic from a safety perspective.

## Claims

1. A method for preparing a solution of polystyrene comprising the step of:
(a) dissolving the polystyrene in a solvent comprising at least 50%, preferably at least 85%, by weight of dimethyl 2-methylpentanedioate.

2. A method as claimed in claim 1, wherein the solvent comprises between 5% and 15% by weight of dimethyl 2-ethylsuccinate.

3. A method as claimed in claim 1 or claim 2, wherein the solvent comprises between 0.5% and 2% by weight of dimethyl adipate.

4. A method as claimed in any one of the preceding claims, wherein the polystyrene in step (a) is expanded polystyrene, and wherein preferably, in step (a), the method comprises the step of reducing the particle size of the expanded polystyrene before dissolving the polystyrene.

5. A method as claimed in claim 4, wherein the step of reducing the particle size comprises cutting the expanded polystyrene and/or granulating the expanded polystyrene, the expanded polystyrene preferably being cut and/or granulated such that it has a mean particle diameter of 50mm or less, more preferably 20mm or less, even more preferably 10mm or less.

6. A method as claimed in any one of the preceding claims wherein, during step (a), the solvent is heated to a temperature above 25°C, preferably 150°C or less, more preferably 100°C or less, even more preferably 50°C or less.

7. A method for recovering polystyrene from expanded polystyrene comprising step (a) as claimed in any one of claims 1 to 6, wherein the polystyrene used in the method is expanded polystyrene.

8. A method as claimed in claim 7 wherein, after step (a), the method includes the step of removing any undissolved solids, preferably by filtration.

9. A method as claimed in either claim 7 or claim 8 wherein, after step (a) and after the optional removal of undissolved solids, the method comprises the step of removing at least some of the solvent from the solution, the solvent preferably being removed in order to form a slurry of polystyrene in the solvent.

10. A method as claimed in claim 9, wherein the step removing the solvent comprises heating the solution to a temperature above 25°C and/or applying a vacuum to the solution, the heating preferably being to a temperature of at least 50°C, more preferably at least 100°C, even more preferably at least 150°C, most preferably about 190°C.

11. A method as claimed in claim 10, wherein the heating is to a temperature of 200°C or less.

12. A slurry of polystyrene in a solvent comprising at least 50% by weight of dimethyl 2-methylpentanedioate obtainable by the method as claimed in claim 9 when the solvent is removed in order to form a slurry of polystyrene in the solvent.

13. A solution of polystyrene in a solvent comprising at least 50% by weight of dimethyl 2-methylpentanedioate obtainable by the method as claimed in any one of claims 1 to 11.

14. A solution or slurry of polystyrene in a solvent comprising at least 50% by weight of dimethyl 2-methylpentanedioate.

15. Polystyrene obtainable by the method as claimed in any one of claims 7 to 11.
